# EUROPEAN PATENT APPLICATION

(11) **EP 1 703 366 A2**
(43) Date of publication of application: **20.09.2006**
(21) Application number: 06250940.1
(22) Date of filing: 22.02.2006
(51) Int. Cl.: G06F 3/046

(54) **Manufacture of interactive surface**

(30) Priority: 25.02.2005 GB 0503929
(71) Applicant: Promethean Technologies Group Ltd., Blackburn Lancashire BB1 5TH (GB)
(72) Inventor: Unsworth, Peter, Slaidburn Clitheroe Lancashire BB7 3EP (GB)
(74) Representative: Williams, David John

(57) **Abstract**

There is disclosed a method of manufacturing an interactive surface, comprising: providing an adhesive surface on one side of a substrate; providing a grid array adjacent said adhesive surface; heating the adhesive surface to activate/reactivate it; and bonding the grid array to the one side of substrate.

## Description

The invention relates to interactive display systems and more particularly to a method of manufacture of an interactive surface for such a system.

A typical example of an interactive display system is an electronic whiteboard system. An electronic whiteboard system typically is adapted to sense the position of a pointer device relative to a working surface of the whiteboard, the working surface being an interactive surface. When an image is displayed on the work surface of the whiteboard, and its position calibrated, the pointer can be used in the same way as a computer mouse to manipulate objects on the display by passing the pointer over the surface of the whiteboard.

A typical application of an interactive whiteboard system is in a teaching environment. The use of interactive whiteboards improves teaching productivity and also improves student comprehension. Such whiteboards also allow use to be made of good quality digital teaching materials, and allow data to be manipulated and presented using audio visual technologies.

A typical construction of an electronic whiteboard comprises providing an array or matrix of drive and sense coils behind or underneath the working surface of the whiteboard to thereby form an interactive surface, which coils interact with electromagnetic elements in the pointer device. In order to accurately determine the position of the pointer relative to the interactive surface of the board, a complex array of drive and sense coils is necessary, and the accurate manufacture of such arrays are essential to the operation of the whiteboards. In particular, preferably there should be provided a quick and accurate manufacturing process for such arrays in order to provide for the reliable mass-production of whiteboards.

The prior art is known to suffer from various disadvantages. The cost of the manufacturing process itself is expensive, and the manufacturing process is limited by the time taken to complete various stages thereof.

It is an aim of the invention to provide a cheaper and/or quicker technique for the manufacture of an interactive surface.

It is a further aim of the invention to provide an improved technique for the manufacture of an interactive surface for an interactive display system, such as a work surface for use in such a system.

In accordance with the present invention there is provided a method of manufacturing an interactive surface, comprising: providing an adhesive surface on one side of a substrate; providing a grid array adjacent said adhesive surface; heating the adhesive surface to activate/reactivate it; and bonding the grid array to the one side of substrate.

Advantageously, the inventive method provides a method of manufacture which is fast, reliable, and cost-effective.

The step of providing an adhesive surface preferably comprises applying a coating of adhesive, which is preferably applied using a roller process technique. Such technique allows for adhesive to be applied quickly, thereby speeding up the overall manufacturing process. Whilst the capital cost of roller process equipment is expensive, thereafter the cost of coating individual substrates is much reduced comparative to prior art techniques.

The adhesive preferably comprises a low cost adhesive. The use of a low-cost adhesive is enabled by the roller process technique. In the prior art, techniques used for the application of an adhesive to a substrate in such a manufacturing process typically require expensive adhesives, because of the disadvantageous techniques used for applying the adhesive.

The step of heating the adhesive layer preferably comprises infra-red heating. Generally the heating step in accordance with the invention provides for a uniform distribution of the adhesive on the surface of the substrate, presenting a smooth surface of adhesive. This ensures good contact when the adhesive surface is presented for bonding to the grid.

Preferably the step of bonding the grid array to the one side of the substrate comprises applying the grid array and the substrate together.

The time for the bonding process is minimised by the provision of a uniform, smooth adhesive surface in preparation for the activation/reactivation process.

Preferably the method comprises the step of providing a resilience to the applying force to accommodate for any unevenness in the surface of the adhesive layer. However such unevenness is significantly reduced by the inventive techniques in comparison with the prior art processes.

The step of providing a resilience may comprise providing a resilient layer on the other side of the board, to which other side an applying force is applied.

Generally the inventive manufacturing process may be used to manufacture an interactive surface wherein a grid arrangement is provided in association with a substrate, which substrate preferably provides a work surface on one side thereof.

The interactive surface forms, in one embodiment, part of a whiteboard assembly arrangement. In another embodiment the interactive surface forms part of a graphics tablet.

The interactive surface may be provided for cooperation with an electromagnetic pointing device. The grid having only a sense portion or having a drive and a sense portion, in dependence on whether such pointing device is passive or active. The interactive surface may be a touch-sensitive surface, not associated with an electromagnetic pointing device.

The inventive process thus advantageously provides the following features: a fast speed of cure; dry handling of the further substrate; low cost of base adhesive; and bonding of the grid directly to the work surface.

In accordance with a further aspect of the invention there is provided an interactive surface manufactured according to the inventive method.

The invention is described by way of example with reference to the accompanying Figures, in which:
Figure 1 illustrates an example of an interactive display system;
Figure 2(a) illustrates an example of the functional elements of a whiteboard apparatus arrangement of an interactive display system;
Figure 2(b) illustrates an example functional structure of a pointing device for use with the whiteboard apparatus arrangement of Figure 2(a);
Figure 3 illustrates a portion of a grid array of an interactive surface associated with the whiteboard apparatus arrangement of Figure 2(a); and
Figures 4 to 13 illustrate stages in the assembly of a whiteboard in a preferred embodiment of the invention.

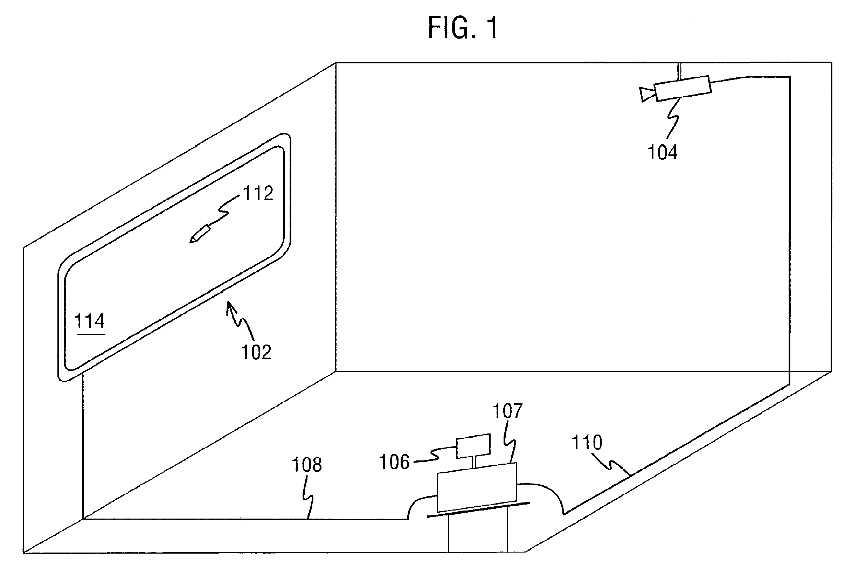

Referring to Figure 1, an exemplary interactive display system comprises a whiteboard assembly arrangement generally designated by reference numeral 102, a computer 107 having an associated display 106, and a projector 104. The computer 107 is connected to the whiteboard assembly arrangement 102 via a communication link 108, and to the projector 104 via a communication link 110. The projector 104, which may be fitted to a ceiling of a room such as a classroom, receives signals from the computer 107 which are translated into corresponding projection images for projection onto a display surface 114 of the whiteboard assembly arrangement 102.

The image projected on the display surface 114 of the whiteboard assembly arrangement 102 may be the same as that displayed on the screen 106 of the computer 107.

The interactive display system also includes one or more pointing devices or pointers, as represented by pointing device 112, which cooperate with the whiteboard assembly arrangement 102. The pointing device 112 is moved across the display surface 114 of the whiteboard assembly arrangement 102, in contact with or close to the surface. The position of the pointing device 112 relative to the display surface 114 of the whiteboard assembly arrangement 102 is, in one type of arrangement, detected electronically by means of a wire grid embedded beneath the display surface 114. The pointing device 112 may be moved around the display surface 114 to write on the display surface, for example, or to highlight images displayed on the display surface. The use of such a pointing device in combination with a whiteboard assembly arrangement is well-known to one familiar with the art.

Using methods known in the art, the pointing device 112 can function in the same way as a computer mouse. The pointer may be provided with buttons or such like which may be depressed, to provide for functional operations in much the same way as buttons may be provided on a computer mouse. For example, by depression of a button a displayed icon over which the pointing device 112 is positioned may be selected. For example, by depression of a button the functional operation of the pointer may change from a pen to an eraser.

In general, the movement of the pointing device 112 across the display surface 114 is detected by the embedded grid array, and such movement translated to be superimposed on the displayed image, such that the displayed image projected by the projector 104 is adapted to display any required action associated with the pointing device, as is known in the art.

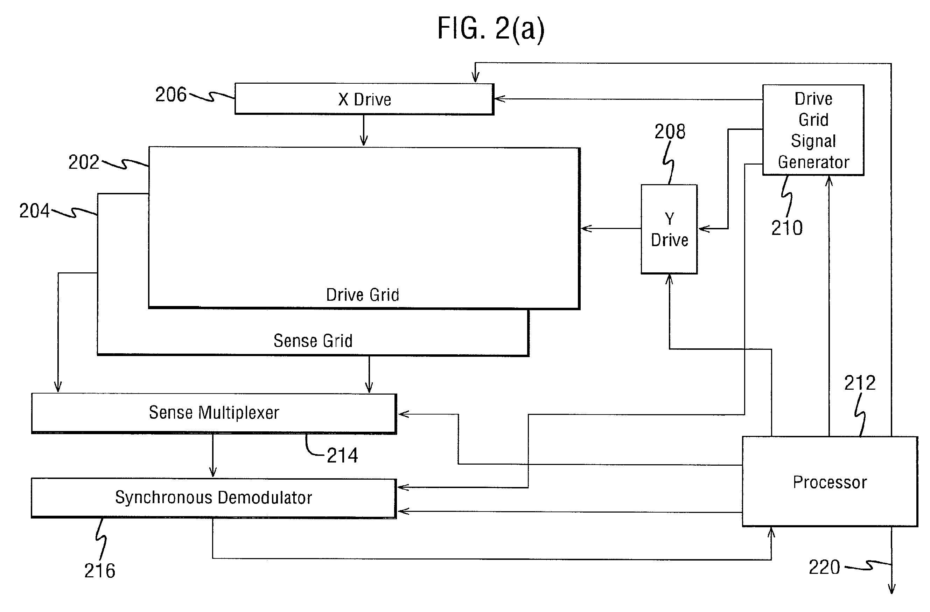

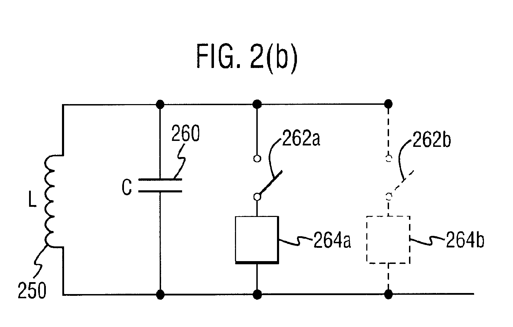

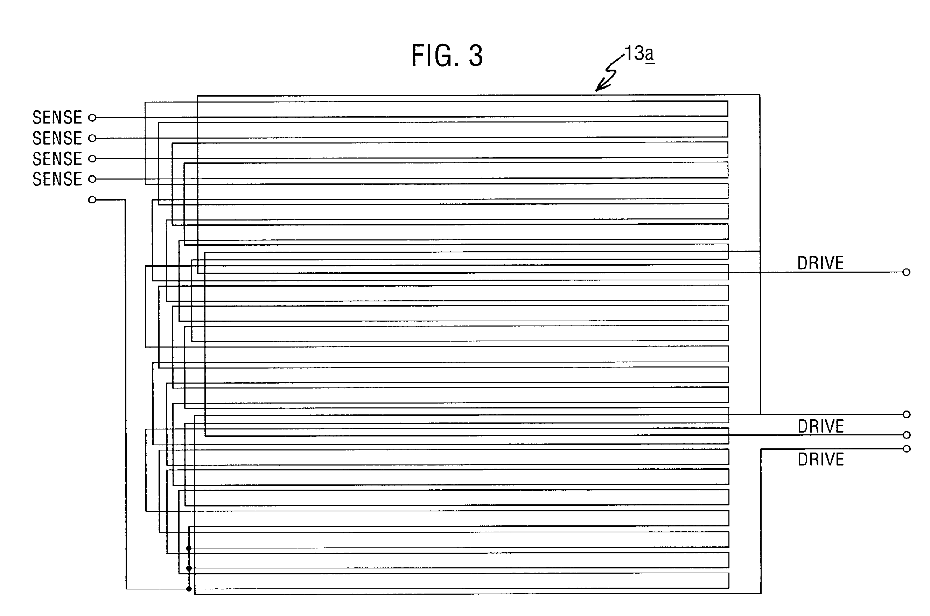

The structure of the whiteboard assembly arrangement and the pointing device for operation of the interactive display system may be one of several different implementations. In a preferred arrangement the whiteboard assembly arrangement 102 includes a grid portion behind the display surface, which comprises two sets of wire loops arranged orthogonally to each other. The pointing device 112 is adapted to induce a current in the wire loops which can be used to determine the position of the pointing device 112. In a particularly preferred arrangement the pointing device 112 is a passive electromagnetic device: a drive grid induces a current in the pointing device, which in turn induces a current in a sense grid. The operation of such an arrangement is discussed further below with reference to Figure 3 in combination with Figure 2(a).

Electronic control circuitry is preferably provided within the whiteboard assembly arrangement 102 for processing signals generated by cooperation of the wire grid beneath the display surface and the pointing device, and to thus determine the position of the pointing device and information corresponding to any provided buttons on the pointing device being selected.

With reference to Figure 2(a), there is shown an exemplary overview of the functional elements of a preferred whiteboard assembly arrangement, which may be provided by control circuitry associated with whiteboard assembly arrangement 102.

The exemplary whiteboard assembly arrangement 102 includes a drive grid 202 and a sense grid 204. The drive grid 202 consists of a first plurality of conducting coils arranged in a first orientation and a second plurality of conducting coils arranged in a second orientation, the second orientation being orthogonal to the first orientation. One set of coils, hereinafter referred to as the X drive coils, provides a set of X-axis drive coils, and the other set of coils, hereinafter referred to as the Y drive coils, provides a set of Y-axis drive coils. The sense grid 204 consists of a first plurality of conducting coils arranged in a first orientation and a second plurality of conducting coils arranged in a second orientation, the second orientation being orthogonal to the first orientation. One set of coils, hereinafter referred to as the X sense coils, thus provides a set of X-axis sense coils, and the other set of coils, hereinafter referred to as the Y sense coils, provides a set of Y-axis sense coils.

The sense grid 204 comprises a balanced array or matrix of conducting coils laid side by side, each coil being paired with an identical but oppositely wound coil, the coils being inter-connected so as to give a multi-phase output signal. The pattern of inter-connection is repeated many times over the area of the whiteboard, with each complete pattern being referred to commonly as a "pitch".

The sense grid 204 has two separate and independent such arrays of coils, which are placed orthogonal to each other to permit position sensing in perpendicular X and Y axes. The pattern of coils is preferably produced by wiring of a conductive material.

The drive grid 202 is also formed as two orthogonal arrays or matrices, for driving in perpendicular X and Y axes, and may be fabricated by the same techniques as is the sense grid. The drive grid comprises individual coils laid side-by-side which coils are nominally of a pitch or smaller in width.

The drive grid is connected to receive drive signals from both an X-axis drive multiplexer 206 and a Y-axis drive multiplexer 208. The X-axis and Y-axis drive multiplexers 206 and 208 provide excitation current to ones of the X and Y drive coils respectively. The drive signals are substantially sinusoidal, and are preferably generated by a programmable signal source which is locked to a stable reference frequency.

A drive grid signal generator 210 generates drive signals to each of the X-axis and Y-axis drive multiplexers 206 and 208.

The operation of the X-axis and Y-axis drive multiplexers is controlled by a processor 212, which provides a control signal to each of the X-axis and Y-axis drive multiplexers and the drive grid signal generator.

The drive grid signal generator 210 is preferably coupled to a power amplifier which boosts the available current for the drive signals. The drive grid signal generator 210 also provides clock signals as an output thereof to demodulation circuitry.

The pointing device 112 is, in a preferred embodiment, a device containing a tuned circuit. When the drive multiplexers drive an alternating current into the X or Y drive coils of the drive grid, the associated changing magnetic field induces a voltage signal in the tuned circuit of the pointing device. The resultant current induced in the pointer then causes a magnetic field which induces a voltage signal in the X and Y sense coils of the sense grid.

The pointer is described in more detail with reference to Figure 2(b). Figure 2(b) shows schematically a circuit of a pointer for use in combination with the whiteboard apparatus arrangement of Figure 2(a). The pointer comprises an LC tuned circuit including a coil 250 and a capacitor 260. In parallel with the tuned circuit are one or more switched resistors. In Figure 2(b) there is shown a first series combination of switch 262a and resistor 264a in parallel with the tuned circuit, and a second series combination of switch 262b and resistor 264b. When the pointer is in form of a stylus or pen, the resistors may be switched either axially by the stylus tip or radially using buttons.

In use, an alternating magnetic field at a frequency f₁ caused by the excitation current in a coil of the drive grid acts on the tuned circuit of the pointer, the resonant frequency of which is set to approximately f₁. This causes the tuned circuit to resonate, and the magnetic field produced by the coil 250 induces a voltage signal into the sense grid. The resistors are switched into the circuit so as to alter the Q-factor of the LC tuned circuit.

A sense multiplexer 214 is connected to receive output signals from the sense grid 204. Current induced in ones of the X and Y sense coils is detected at the sense multiplexer.

The sense multiplexer 214 provides an output which is connected to an input of a synchronous demodulator 216. After the sensed voltage signals are received by the sense multiplexer 214 they are thus de-modulated in the synchronous demodulator. The purpose of the synchronous demodulator is to reject any extraneous noise and unwanted background signals. The demodulation clock for the synchronous demodulator is derived from the drive grid signal generator 210. The demodulation clock circuitry provides both phase and quadrature data to be discerned from the sensed signals.

The digital signals produced at the output of the synchronous demodulator 216 are then output to the processor. The processor preferably processes such signals to calculate the position of the pointer. The calculated position information is then further output, via an output interface 220, to a host device such as computer 106 of Figure 1.

The processor 212 generates control signals on outputs to each of the drive grid signal generator 210, the sense multiplexer 214, the synchronous demodulator 216, and each of the X and Y drive multiplexers 206 and 208.

The operation of the whiteboard assembly arrangement 102 and the pointing device 112 are now described in more detail.

The X and Y drive coils are superimposed to the whiteboard assembly arrangement 102 display surface 114. The drive coils of the drive grid can be selected individually and, if required, in a random fashion by the drive multiplexers under the control of the processor. When driving the X drive grid, the Y sense grid is connected to the synchronous demodulator via the sense multiplexer. Conversely when driving the Y drive grid, the X sense matrix is connected to the synchronous demodulator via the sense multiplexer.

The balanced array of each of the X sense coils and Y sense coils is such as to produce a nominal null in the sensed signal when the respective orthogonal drive coil is excited and no pointing device is present. This is due to the fact that any signal induced in one of the clockwise sense coils directly by the orthogonal drive coil will be induced in an equal and opposite sense in the corresponding counter clockwise sense coil. However when the pointer which is excited by a drive coil at its resonant frequency is placed in proximity to a sense coil it retransmits magnetic field which induces a voltage signal in the sense coils according to its position relative to the sense coils.

Figure 3 shows an arrangement of a Y portion of the sense grid and a Y portion of the drive grid in an exemplary embodiment. The sense grid, for the purposes of illustration in this embodiment, is of a four-phase nonoverlapping type. The technique of operation is suited to many types of commonly used grid or matrix topologies and is particularly suited to topologies in which sense coils are arranged so that there is nominally a null sense voltage when no pointer is present, as discussed above.

The Y sense grid has an interconnected pattern which repeats several times across the display surface, each repeat being commonly referred to as a pitch. The number of pitches needed in any arrangement is dependent upon the width of each pitch and the size of the display surface. The sense grid permits the processor to determine with high resolution the position of the pointer within the pitch. This is achieved as follows.

Four phase signals from the sense coil are amplified and demodulated by the synchronous demodulator to generate DC voltage levels. The DC voltage levels are proportional to the amplitude of the AC signal which is being demodulated from the sense coils. The DC voltage levels are then converted into digital values by an analogue to digital converter (not shown) and are sent to the processor. The processor undertakes a vector summation on the four numbers (representing the four differently phased coils) and from this the exact position of the pointing device with respect to the four coils, i.e. within a particular pitch, is determined.

However the signal from the sense matrix alone cannot determine the absolute position of the pointer, since the processor cannot know from this information alone in which pitch the pointer is inducing the signals.

In order to determine the pitch in which the signals from the pointing device are induced, it is necessary to excite selectively the appropriate drive coils. The number of drive coils is equal to or greater than the number of pitches. For example to determine the pitch in the X axis the processor selectively energises the X drive coils and determines the peak amplitude and phase of the signals induced in the Y sense coils for each selected X drive coil. From this amplitude and phase information the X pitch is determined.

Conversely by selecting the Y drive coils and analysing the X sense coils the Y pitch is determined.

There has thus been described the functional structure and operation of an interactive display system including a whiteboard assembly apparatus.

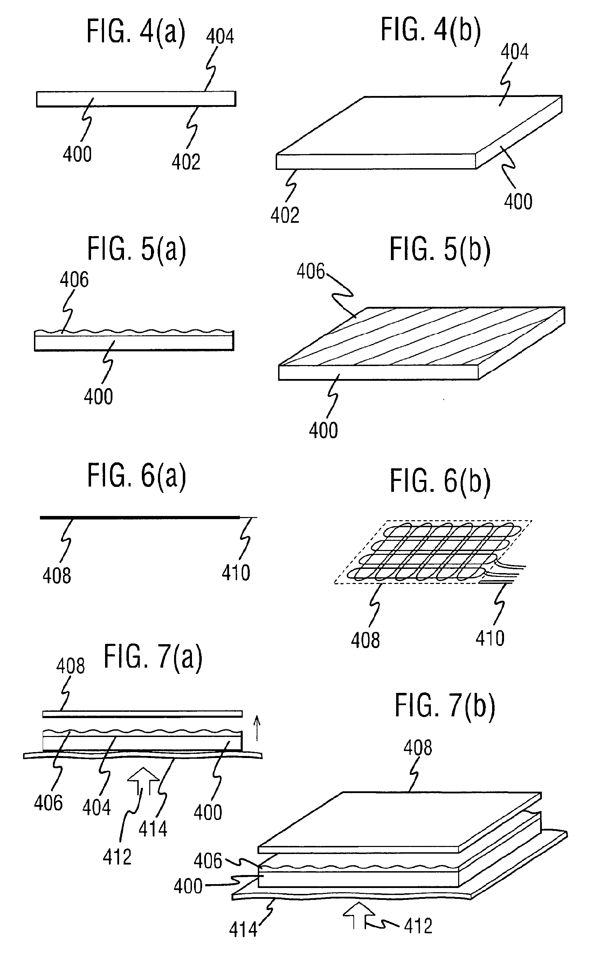

An advantageous technique for the manufacture of the whiteboard assembly apparatus 102 of Figure 1 is now described with reference to Figures 4 to 13.

With reference to Figures 4(a) and 4(b), a substrate 400 provides, on a first surface 402 thereof, a work surface for a whiteboard. Thus, in use, the first surface 402 is the surface which provides the work surface on which, for example, computer images are displayed, a pen is traversed etc. This surface thus corresponds to the display surface 114 of Figure 1. The substrate 400 has a second surface, 404, opposite the surface 402.

The substrate 400 in effect forms the working surface of a whiteboard arrangement.

As particularly illustrated by Figure 4(b), the substrate is generally rectangular in shape, having a thickness determining the distance between the two surfaces 402 and 404.

A preferred thickness of the substrate 400 is in the range 0.8mm to 1.5mm. A preferred material of the substrate 400 is a high pressure laminate.

The work surface 402 of the substrate 400 is preferably coated with a suitable protective coat (not shown in the Figures). This is preferably applied prior to the assembly process described herein. A preferred technique for the coating process is a roller process technique.

With further reference to Figures 5(a) and 5(b), the second surface 404 is preferably provided with an adhesive layer 406 thereon. The adhesive layer is a dry layer. A preferred thickness of the adhesive layer 406 is in the range 0.5m to 1.5mm. A preferred material of the adhesive layer 106 is an ethylene vinyl acetate (EVA) hot melt adhesive. A preferred technique for applying the adhesive layer is coating using a roller process technique. The adhesive is preferably a low-cost adhesive.

Figures 6(a) and 6(b) illustrate a wire grid or array 408. The wire grid or array comprises the drive and sensor coils for the whiteboard. The construction and arrangement of the sensor/drive coils is in accordance with the required implementation. In a preferred implementation, as described hereinabove, the wire grid comprises a set of X and Y orientated sensor coils, and a set of X and Y orientated drive coils. Thus the grid 408 may comprise four overlayed wire grids. The X and Y orientation refers to axes relative to the whiteboard surface, in use the X direction being a horizontal direction and the Y direction being a vertical direction.

The actual grid structure will be implementation dependent, the grid structure specifically described herein being by way of example only. Any arrangement of sense coils or drive coils may be used. It should also be noted that although the example described herein is that of a passive pointing device, a system may be provided having an active (independently energised) pointing device. Such systems may be provided only with a sense grid, and no drive grid.

It should be understood, therefore, that the manufacturing process described herein may be utilised for any grid structure.

The grid or array 408 is preferably formed of conductive wires. The process for forming the grid may be any available process, preferably an automated process.

It is an important characteristic of the grid structure, as is well understood by one skilled in the art, that the wires of the grid structure are positioned precisely, and maintained precisely in position.

The sides of the wire grid 408 are defined by loop-back points of the coil arrays. In addition, as generally denoted by reference numeral 410, in one corner of the array 408 the ends of the sensor coils from which outputs are provided and the ends of the drive coils (when provided) to which inputs are provided are located. These are connected to an electronic control unit at a later stage of the assembly process, as discussed further herein below.

A preferred thickness of the wire grid 408 is in the range 0.2mm to 1mm. A preferred material of the wire grid 108 is enamelled copper wire.

Referring now to Figures 7(a) and 7(b), the substrate 400 and the wire grid 408 are disposed such that the second side 404 of the substrate 400, having adhesive layer 406 pre-applied thereto, faces the wire grid 408, i.e. the flat surface of the substrate to which the adhesive is applied faces the surface of the wire grid. Preferably the substrate 400 is held in a horizontal position, with the second side 404 facing upwards. The wire grid 408 is disposed a fixed distance above the second surface 404 of the substrate 100.

The substrate 400 is raised, as denoted by arrow 412, toward the wire grid 408 by a fixed distance. A felt pad 414, is preferably disposed against the first side 402 of the substrate, as it is raised, to provide resilience against the raising force and to take up an amount of unevenness which may be associated with the adhesive layer 106 on second side 404. The second surface 104 of the substrate 100, to which the adhesive 406 is pre-applied, is thus pressed against, or presented to, the wire grid 408. The two structures are then applied together.

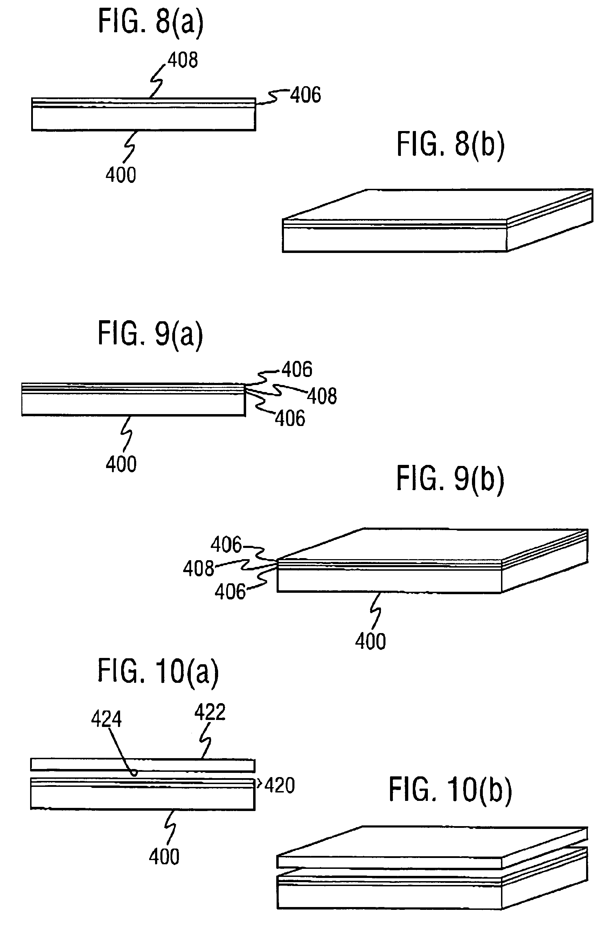

The adhesive layer 406 is then reheated. Figures 8(a) and 8(b) illustrate the resulting structure prior to reheating of the adhesive layer.

As part of this process the adhesive layer 406 is activated or reactivated, preferably with the use of an infra-red heater. The heater preferably heats the adhesive to a temperature of the order around 110°C. However the reflow temperature is determined by the exact formulation of the hot melt adhesive concerned. The temperature and exposure times used need to be compatible with the characteristics of the materials used.

As a result of the reheating, the adhesive bonds the wire grid to the second side 404 of the substrate 400. A smooth surface finish to the thus bonded wire grid and substrate is obtained by the reheating. A uniform thickness layer is also achieved. As can be seen in Figures 9(a) and 9(b), the wire grid 108 is embedded in the adhesive 406, which is fixed to the surface 404 of the whiteboard 400.

After the adhesive has been activated or reactivated by means of reheating, it is allowed to cool. Once the adhesive cools, it becomes rigid and the wires of the wire grid are then held in precise positions.

A characteristic of the adhesive to be used for the layer 406 is that it should preferably be of a consistency such that under 'normal' whiteboard operational working temperatures the adhesive will not permit movement of the wires of the grid from their precise positions as determined in manufacture. In other words, at 'normal' working temperatures of the equipment the adhesive is rigid. The 'normal' working temperatures of the whiteboard system will be defined by its use.

As a result of the smooth finish obtained on the surface, the bonded arrangement may be directly combined with a further substrate. Thus a further substrate, having a surface size corresponding to the surface size of the bonded arrangement, may be applied to the bonded arrangement. This is illustrated by Figures 10(a) and 10 (b).

The further substrate provides for the physical robustness of the display surface. On its own, the substrate 400 is typically not sufficiently robust for use on its won. It should be noted, as understood by one skilled in the art, that the thickness of the substrate 400 may at least in part be limited by the need to allow for electromagnetic interaction between a pointing device and the grid, where necessary.

Referring to Figures 10(a) and 10(b), the bonded arrangement includes the substrate 400 with the grid array and adhesive combination fixed thereto and is generally denoted by reference numeral 420.

A further substrate 422, provided with a pressure sensitive hot melt adhesive layer 424 on one surface thereof, is disposed adjacent the bonded arrangement. The pressure sensitive adhesive layer 424 on the bonded arrangement is arranged to face the grid array and adhesive combination 420 on the substrate 400.

A preferred thickness of the further substrate 422 is in the range 15mm to 30mm. A preferred structure of the further substrate is a composite panel comprised of two thin sheets of tensionally strong material, such as glass reinforced polyester (GRP) or glass fiber laminate, preferably of a thickness in the range of 0.5mm to 1.5mm, bonded to the opposing surfaces of a thick core material such as honeycomb paper or rigid plastic foam.

The coating of the further substrate 422 with the pressure sensitive adhesive layer 424 is preferably achieved with a roller coater or slot die coater. A preferable adhesive coating temperature is of the order around 120°C. However the coating temperature is determined by the exact formulation of the hot melt adhesive concerned. The temperature and exposure times used need to be compatible with the characteristics of the materials used.

A preferred thickness of the pressure sensitive adhesive layer 424 is in the range 0.2mm to 0.8mm. A preferred material of the pressure sensitive adhesive layer is a synthetic polymer or rubber-based adhesive.

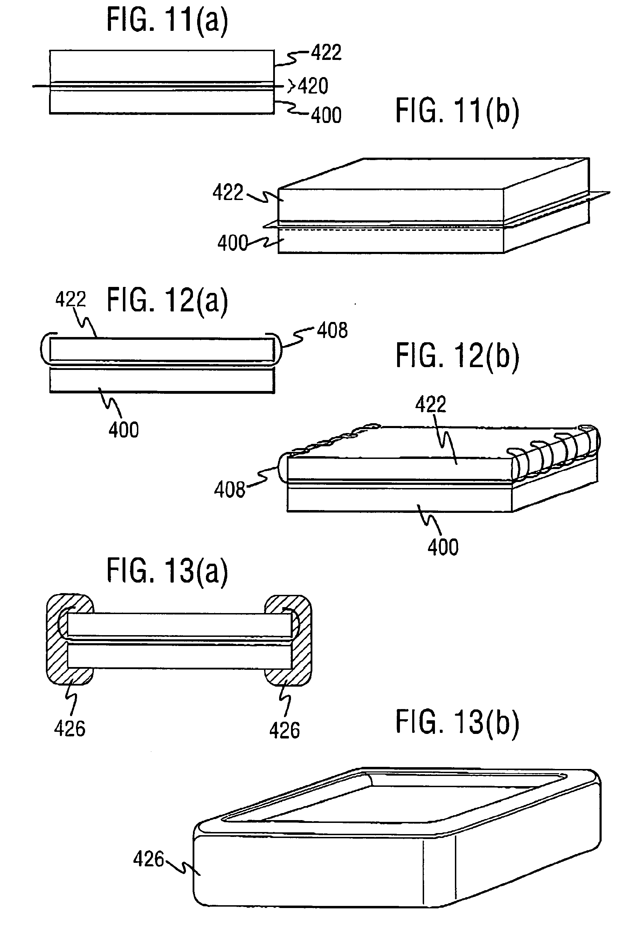

The bonded arrangement and the further substrate are then pressed together in a laminator to form a laminate structure as illustrated in Figure 11(a) and 11(b). This laminate structure is preferably formed by pressure alone.

As can be seen in Figure 11(a) and 11(b), in practice the ends of the wire grid, which are looped ends of wire, extend beyond the ends of the laminated structure, the wire grid extending slightly larger than the substrate and the further substrate. In a further step these ends are turned back over the further substrate 422, as illustrated in Figures 12(a) and (b).

In a further step, a side extrusion is put over the laminated structure. Referring to Figures 13(a) and 13(b), it can be seen that a side extrusion 426 is fitted around the edges of the structure formed in Figure 12, so as to provide a rounded finish to the entire substrate structure. In this way the substrate structure is finished off, with all electrical elements concealed and protected.

In a final step, not shown in the Figures, an electronic control box is fitted to the assembly, which is connected to the whiteboard via the various wires 410 connected to the grid array. This electronic control box may be fitted in a corner of the whiteboard assembly arrangement, preferably behind the display surface. The display surface may be provided with a 'window' therein, which allows for an infra-red sensor to be fitted behind the display surface. The specific arrangement of any control electronics, and the functionality provided by the system, will be implementation dependence and is outside the scope of the present invention.

It should be noted that although the description herein is presented in the context of an interactive display system incorporating a whiteboard assembly arrangement, the invention is not limited to such. The invention generally applies to interactive input/output devices, and may be applied to, for example, the manufacture of graphics tablets such as may be used in interactive display systems. The invention also applies to any type of interactive display provided with a grid array, and encompasses, for example, touch-sensitive interactive displays.

## Claims

1. A method of manufacturing an interactive surface, comprising: providing an adhesive surface on one side of a substrate; providing a grid array adjacent said adhesive surface; heating the adhesive surface to activate/reactivate it; and bonding the grid array to the one side of substrate.

2. A method according to claim 1 wherein the step of providing an adhesive surface comprises applying a coating of adhesive.

3. A method according to claim 2 wherein the step of applying a coating comprises a roller process technique.

4. A method according to any preceding claim wherein the adhesive comprises a low cost adhesive.

5. A method according to any preceding claim wherein the adhesive is rigid at operational temperatures of the interactive surface.

6. A method according to any preceding claim in which another side of the substrate forms a work surface.

7. A method according to claim 6 further comprising the step of applying a protective coating to the work surface.

8. A method according to claim 7 wherein the step of applying the protective coating uses a roller process technique.

9. A method according to any preceding claim wherein the step of heating the adhesive layer comprises infra-red heating.

10. A method according to any preceding claim wherein the step of bonding the grid array to the one side of the substrate comprises applying the grid array and the substrate together.

11. A method according to claim 10 further comprising the step of providing a resilience to the applying force to accommodate for any unevenness in the surface of the adhesive layer.

12. A method according to claim 11 wherein the step of providing a resilience comprises providing a resilient layer on the other side of the board, to which side an applying force is applied.

13. A method according to any preceding claim wherein the bonded structure provides a smooth surface on the one side of the board.

14. A method according to any preceding claim wherein the bonded structure provides a uniform surface on the one side of the board.

15. A method according to any preceding claim wherein the heating step results in the grid being embedded in the adhesive, and thereby fixed to the one surface of the board.

16. A method according to any preceding claim further comprising the step of combining a further substrate with the bonded arrangement.

17. A method according to claim 16 wherein the further substrate is provided with a pressure sensitive hot melt adhesive layer on one side thereof, which side is arranged to face the one side of the bonded arrangement, the method further comprising pressing the substrate and bonded arrangement together to form a laminate structure.

18. A method according to claim 17, further comprising the step of turning back any portions of the grid protruding from the bonded arrangement over the further substrate.

19. A method according to claim 17 or claim 18, further comprising the step of fitting a side extrusion around the edges of the laminate structure.

20. A method according to any preceding claim wherein the interactive surface is a whiteboard assembly arrangement.

21. A method according to any preceding claim wherein the interactive surface is a graphics tablet.

22. An interactive surface manufactured according to a method as defined in any preceding claim.

23. An interactive surface or a method of manufacture thereof as described herein with reference to or as shown in any one of Figures 4 to 13.
